Europäisches Patentamt

European Patent Office

Office européen des brevets

(19)

(11) Numéro de publication: **0 026 514**

**A1**

(12) **DEMANDE DE BREVET EUROPEEN**

(21) Numéro de dépôt: **80200840.9**

(22) Date de dépôt: **09.09.80**

(51) Int. Cl.³: **B 60 B 21/06**
**B 60 B 5/02, B 60 B 1/00**
**B 62 J 5/20**

(30) Priorité: **27.09.79 FR 7924011**
**29.01.80 FR 8001827**

(43) Date de publication de la demande:
**08.04.81 Bulletin 81/14**

(84) Etats Contractants Désignés:
**AT BE CH DE FR GB IT LI LU NL SE**

(71) Demandeur: **Société de Recherche et de Promotion d'Activités Nouvelles ACNO**
**68, rue de Paris**
**F-93804 - Epinay Cedex(FR)**

(72) Inventeur: **Ramond, Louis Maurice**
**Les Troènes 8, rue des Chambons**
**F-42160 - Andrézieux(FR)**

(72) Inventeur: **Boissel Jean-François**
**8, rue de Bellevue**
**F-95160 - Montmorency(FR)**

(74) Mandataire: **Boissel, Jean-François**
**ACNO 68, rue de Paris**
**F-93804 - Epinay Cedex(FR)**

(54) Jante réalisée par moulage de matières thermoplastiques pour roue à rayons.

(57) Elle comprend un caisson (3) épais équipé de plots (4) coniques de réception de têtes de rayon et le fond de jante (9) a des parties en relief (10) pour la montage automatique de roues.

FIG.6

EP 0 026 514 A1

0026514

La présente invention est relative à une nouvelle jante pour roue à rayons, notamment de bicyclette.

On connaît déjà les jantes réalisées en bois pour être robustes, légères et souples, mais qui sont très chères.

Les jantes réalisées en acier sont robustes et assez bon marché, mais ont alors l'inconvénient d'être très lourdes.

C'est pourquoi on réalise également des jantes en profilé de métal ou alliage léger qui sont moins lourdes que les jantes d'acier, mais sont relativement plus fragiles et surtout plus chères que ces dernières.

En outre, les jantes métalliques, qu'elles soient réalisées en acier ou en alliage léger, sont imprécises en diamètre.

L'invention a pour but de réaliser une nouvelle jante pour roue à rayons présentant simultanément toutes les qualités suivantes : solidité, légèreté, souplesse, précision, bas coût de production et, à cet effet, fait appel aux techniques de moulage de matières thermoplastiques qui permettent de réaliser en une seule opération des pièces monobloc de formes complexes constituant un produit fini.

Conformément à l'invention, une jante pour roue à rayons, comportant à sa périphérie extérieure des flancs d'appui de bandage reliés par une partie cylindrique constituant la périphérie médiane intérieure de la jante et présentant des logements angulairement équidistants d'écrous de mise en tension de rayons de liaison avec un moyeu central disposés successivement alternativement d'un côté puis de l'autre du plan médian de symétrie de la jante, se caractérise en ce que, la jante étant monobloc fabriquée en une seule opération par injection de matière thermoplastique dans un moule : d'une part, la partie cylindrique médiane intérieure de la jante a la forme d'un caisson annulaire ouvert vers l'extérieur dont les parois en regard se prolongent vers l'extérieur par lesdits flancs d'appui de bandage, et dont le volume intérieur est équipé de plots de réception des têtes de rayon de même hauteur que la profondeur du caisson et, d'autre part, les parois latérales dudit caisson ouvert vers l'extérieur sont reliées entre elles par des entretoises planes raccordées perpendiculairement au fond du caisson et venant affleurer dans une surface de révolution constituant le fond de jante.

Ce type de structure de jante en matière thermoplastique moulée présente donc la première caractéristique de comporter un fond de jante, en forme de caisson ouvert entretoisé, qui est beaucoup plus épais par rapport aux fonds des autres types de jantes en bois ou métalliques an-

2

0026514

térieurement connues, ce fond de jante, épais et entretoisé, étant prévu pour donner à la jante, malgré le fait qu'elle est réalisée en matière thermoplastique, moins résistante mécaniquement que l'acier ou les alliages légers, la résistance mécanique nécessaire mesurée par son moment d'inertie.

D'une manière plus précise, lorsque l'on dit que le fond de jante est épais, cela veut dire qu'une telle jante se caractérise en ce que sa hauteur, mesurée par la différence de la valeur des rayons respectivement des cylindres extérieur et intérieur entre lesquels est inscrite la jante, est supérieure à 75 % de la largeur maximale de la jante. Par comparaison, ce rapport ne dépasse pas 65 % dans les autres jantes connues en alliage léger, et est le plus souvent compris entre 50 et 60 %. Pour les jantes en acier, ce rapport est de l'ordre de 50 % ou moins.

Une seconde caractéristique particulièrement intéressante d'une telle jante moulée en matière thermoplastique est la prévision des plots de réception des têtes de rayon, de même hauteur que le caisson annulaire épais de la jante, et disposés comme connu en soi successivement alternativement d'un côté puis de l'autre du caisson et qui remplissent deux fonctions : d'une part, ils participent à la fonction de rigidification de l'ensemble des éléments d'entretoise qui donne du corps à la jante en matière thermoplastique et, d'autre part, ils supportent optimalement les efforts radiaux centripètes exercés sur le caisson annulaire de la jante par les rayons mis en tension puisque ces efforts sont appliqués à proximité de la périphérie extérieure du caisson et à proximité des flancs d'appui du bandage, donc sensiblement dans les mêmes zones de la jante que celles où sont appliqués sur ces flancs les efforts de pression du bandage lorsqu'il est mis sous pression.

La présente invention a pour autre objet des caractéristiques additionnelles des jantes du type générique défini ci-dessus permettant d'en faire un produit industriel fini utilisable directement sur les machines automatiques traditionnelles utilisées couramment dans l'industrie du cycle, notamment pour réaliser le vissage avec couple contrôlé des écrous sur les têtes des rayons, et ceci quel que soit le mode de rayonnage choisi, impliquant des orientations diverses des rayons par rapport à la jante.

A cet effet, une jante selon l'invention se caractérise en outre : d'une part, en ce que lesdits plots de réception des têtes de rayon comportent, dans leur partie extérieure un alésage cylindrique circulaire d'une hauteur au moins égale à l'épaisseur d'une tête d'écrou de rayon, dans leur partie médiane une portée conique destinée à servir d'appui à cet écrou de rayon avec différentes orientations possibles, et dans leur partie intérieure un alésage conique divergent vers l'intérieur de la jante permettant la libre inclinaison des rayons lors du montage de la roue ; et d'autre part, en ce que la partie extérieure du fond de jante est munie d'éléments en relief par rapport à elle pour permettre la détection des plots de réception des têtes de rayon par des palpeurs de machines automatiques à monter des roues.

L'invention a pour autre objet encore de proposer, pour réaliser une jante présentant les caractéristiques ci-dessus, d'utiliser des résines thermoplastiques polyamides ou polyesters injectables chargées de fibres de verre.

Préférentiellement, on utilisera des polyamides 6-6 avec des charges de fibres de verre préensimées allant de 40 à 65 % et de préférence de 45 à 60 %, exprimées en poids.

Egalement, on pourra utiliser des résines polyesters du type polybutylène térephtalate ou polyéthylène térephtalate avec des charges de fibres de verre comprises entre 40 et 45 %, matières qui ont tendance à devenir plus économiques que les polyamides.

De nombreux essais ont en effet montré que, parmi les nombreuses matières thermoplastiques industrielles commercialement disponibles à ce jour, ces matières convenablement chargées de fibres de verre permettaient d'obtenir le meilleur rapport coût/performances.

En particulier, les performances de freinage, qui sont essentielles en matière de sécurité, notamment par temps de pluie ou simplement humide, sont les plus élevées avec ces polyamides chargés de fibres de verre. Celà tient, d'une part, à ce que les surfaces de pièces réalisées en matières plastiques ne "mouillent" pas et que, de plus, lorsqu'elles sont chargées de fibres de verre, ces fibres affleurant à la surface rendent un peu abrasive la surface de freinage de la jante ce qui accroit l'effet de freinage par abrasion des patins sur les flancs de jante.

L'invention porte en outre sur divers autres perfectionnements relatifs au profil proprement dit de la jante et sera plus complètement exposée au cours de la description suivante faite en référence au dessin annexé sur lequel :

la figure 1 est une vue de dessus d'une partie de jante circulaire,

la figure 2 est à plus grande échelle une vue en coupe par II - II de la figure 1,

La figure 3 représente, vue de dessus et de l'extérieur, une

4

partie de jante plus élaborée selon l'invention,

la figure 4 représente, vue de dessous et de l'intérieur, une partie de cette jante,

la figure 5 représente une vue latérale d'une partie de cette jante,

les figures 6, 7, 8 et 9 sont respectivement des vues à plus grande échelle en coupe par VI - VI, VII - VII, VIII - VIII et IX - IX de la jante représentée sur la figure 3,

la figure 10 représente un profil de jante pour réception de boyaux.

Comme on le voit bien sur la figure 2, les flancs d'appui 1 du bandage (non représenté) de la roue prolongent vers l'extérieur les parois en regard 2 d'un caisson annulaire 3.

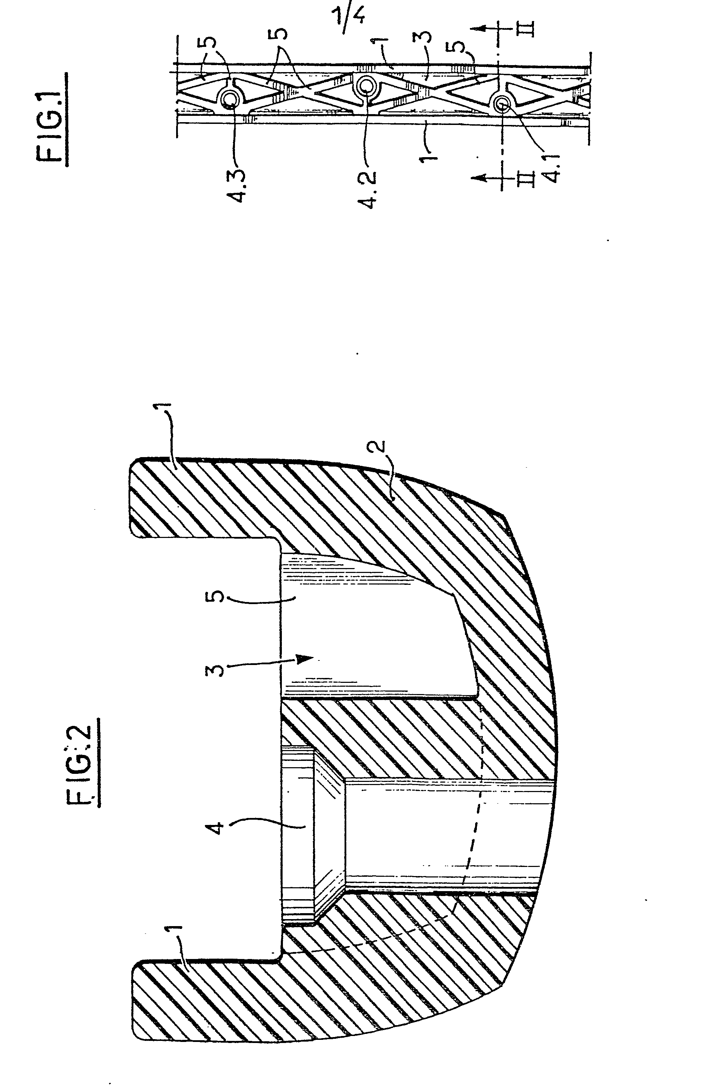

Le volume intérieur de ce caisson est équipé de plots 4 de réception des têtes de rayons de même hauteur que le caisson 3 et disposés comme connu en soi successivement et alternativement d'un côté puis de l'autre du caisson comme le montre la figure 1, voir les plots 4-1, 4-2, 4-3, etc... en nombre égaux au nombre de rayons de la roue, par exemple trente-six.

Par ailleurs, ces parois latérales 2 du caisson sont reliées entre elles par des entretoises planes 5, raccordées perpendicualirement au fond du caisson et reliant entre elles les zones du caisson équipées des plots 4 de réception des têtes de rayons, ainsi que les plots 4 aux faces en regard d'eux du caisson.

Seul l'emploi de la technologie d'injection de matières thermoplastiques permet d'obtenir en une seule opération une pièce monobloc d'une telle structure complexe.

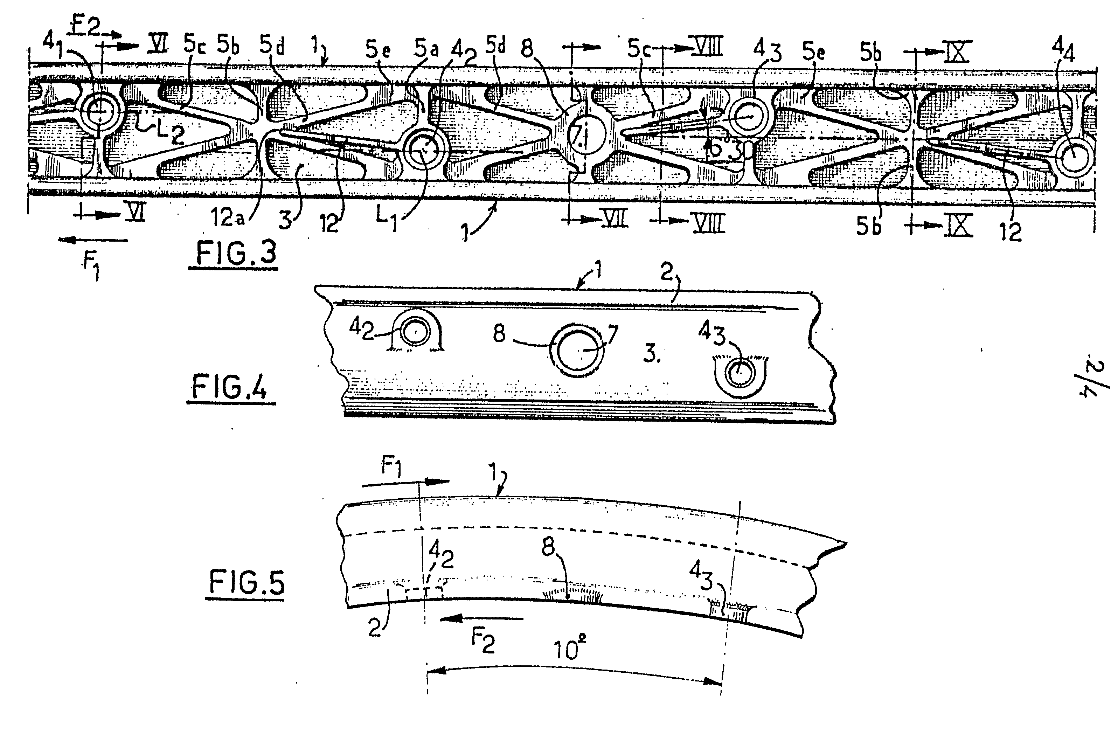

Les figures suivantes, 3 à 10, représentent une réalisation plus élaborée d'une jante selon l'invention. Les mêmes numéros de référence sur ces figures 3 à 10 représentent les mêmes éléments que ceux d'une jante telle que représentée sur les figures 1 et 2.

La jante représentée sur les figures 3 à 10 comporte à sa périphérie extérieure des flancs d'appui 1 d'un bandage non représenté. Les arêtes supérieures 1a et 1b de ces flancs sont arrondies pour permettre aisément le montage, ainsi que le démontage du bandage.

La jante présente sur sa périphérie des logements angulairement équidistants 4-1, 4-2, 4-3, 4-4 etc... pour recevoir des écrous de mise en tension de rayons (non représentés) de liaison avec un moyeu central. Dans l'exemple représenté, il y a ainsi 36 rayons décalés régulièrement de 10° les uns à la suite des autres (figure 5).

La jante est monobloc, étant réalisée en une seule opération par injection de matières thermoplastiques dans un moule.

La partie cylindrique médiane intérieure de la jante a la forme d'un caisson annulaire épais ouvert vers l'extérieur 3 dont les parois en regard 2 se prolongent vers l'extérieur par les flancs 1 d'appui latéral du bandage.

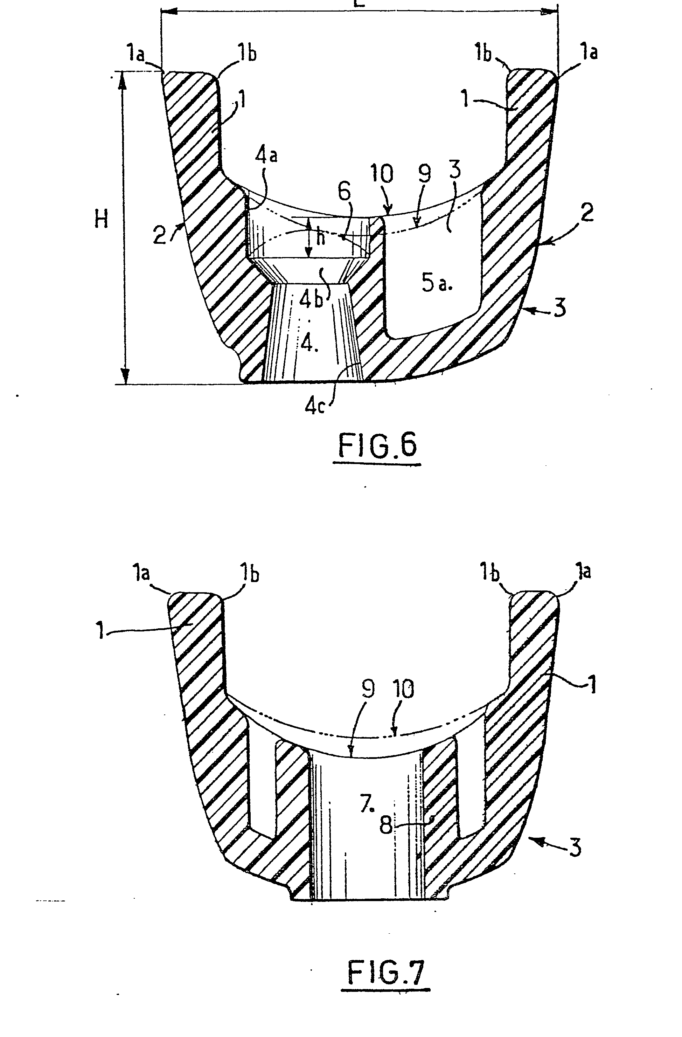

L'épaisseur de ce caisson est telle que la hauteur H de la jante, repérée sur la figure 6, est au moins égale à 75 % de la largeur maximale L de la jante. Cette hauteur ou épaisseur minimale du caisson est nécessaire pour donner à la jante, bien que réalisée par moulage de matière thermoplastique, la résistance mécanique nécessaire mesurée par son moment d'inertie.

Dans le volume intérieur du caisson ouvert 3 sont disposés des plots de réception 4-1, 4-2, 4-3, 4-4 etc... des têtes de rayon qui ont la même hauteur que la profondeur du caisson et sont disposés successivement d'un côté (4-1, 4-3...) puis de l'autre (4-2, 4-4...) du caisson (figure 3).

De façon caractéristique, ces plots de réception des têtes de rayon comportent, comme on le voit sur la figure 6 : dans leur partie extérieure, un alésage cylindrique circulaire 4a d'une hauteur minimale h au moins égale à l'épaisseur d'une tête d'écrou de rayon, schématisée par le trait interrompu 6 ; dans leur partie médiane, une portée conique 4b, destinée à servir d'appui à cet écrou de rayon avec différentes orientations possibles ; et, dans leur partie intérieure, un alésage conique 4c divergent vers l'intérieur de la jante, pour permettre ainsi la libre inclinaison des rayons par rapport à la jante lors du montage de la roue, et ceci quel que soit le mode de rayonnage choisi. Cette conformation caractéristique des plots 4 de réception des têtes de rayon permet l'utilisation sans problème des machines automatiques, par exemple de vissage à couple contrôlé des écrous de rayon, telles que les machines CPM bien connues dans l'industrie du cycle.

Par ailleurs, le volume intérieur du caisson ouvert 3 est entretoisé par un jeu d'entretoises planes 5a, 5b, 5c, 5d, raccordées perpendiculairement au fond du caisson. La prévision de ces multiples entretoises reliant entre elles les parois latérales du caisson vise à rigidifier au maximum le caisson tout en ne remplissant de matière thermoplastique qu'un minimum de volume à l'intérieur du caisson, ceci afin d'obtenir le meilleur rapport possible entre le poids, et donc le coût, d'une jante et ses caractéristiques de résistance mécanique.

Dans le mode de réalisation préféré décrit, ces éléments d'entretoises de rigidification de la jante sont les suivants (figure 3) :

- des entretoises 5a reliant, par l'intermédiaire des plots 4 de réception des rayons, perpendiculairement entre eux les bords opposés du caisson 3 ;

- des entretoises 5b reliant directement perpendiculairement entre eux ces bords ;

- des entretoises 5c, inclinées par rapport au plan de symétrie de la jante et reliant les uns aux autres les plots 4 ; et

- des entretoises 5d, symétriques des entretoises 5c par rapport au plan de symétrie de la jante.

Toutes ces entretoises sont raccordées entre elles, aux plots 4, et aux bords du caisson 3 par des renforcements 5e de matière thermoplastique, et ces raccordements sont tous réalisés avec des rayonnages ou arrondis de manière à éviter impérativement tout angle vif qui serait une amorce de rupture.

En effet, compte tenu de la pression élevée à laquelle peuvent être gonflés les bandages modernes, les flancs 1 d'appui de ces bandages sont soumis à des efforts considérables d'écartement l'un par rapport à l'autre qui sont transmis aux bords latéraux du caisson 3 et qui doivent donc être encaissés principalement par les entretoises 5a et 5b, et accessoirement par les entretoises 5c et 5d. Les entretoises 5c et 5d, outre cette première fonction de résistance mécanique, servent également, d'une part, à encaisser les efforts radiaux centripètes exercés sur la jante par les rayons tendus de la roue et, d'autre part, à donner à la jante la résistance à la torsion qui convient.

En un point de la jante est prévu un trou de valve 7 placé en l'un des croisements d'entretoises 5b, 5c et 5d (figures 3 et 7) et limité par un cylindre 8 auquel se raccordent ces entretoises.

Les entretoises 5a, 5b, 5c, 5d et les renforcements de matière thermoplastique 5e viennent affleurer vers l'extérieur de la jante dans une surface de révolution 9 constituant la partie extérieure du fond de jante contre laquelle vient s'appuyer la chambre à air et le bandage. La forme, en section, de cette surface 9, est telle qu'elle relie par un arc arrondi ouvert vers l'extérieur les deux zones en regard 10a et 10b (voir figure 9) dans lesquelles viennent se loger, après gonflage, les tringles schématisées en 11a et 11b d'un bandage. Cette forme de la surface 9 facilite le montage et le démontage du bandage, et, en particulier lors du gonflage, assure que les tringles 11a et 11b, partant initialement de la zone médiane de la jante, montent bien le long des plans inclinés de la surface 9 vers les flancs d'appui latéraux 1, sans risquer de coincer la chambre à air, et en assurant un centrage parfait du bandage par rapport à la jante.

De façon également caractéristique, selon l'invention, la surface extérieure 9 du fond de jante est munie d'éléments en relief par rapport à elle et affleurant dans une seconde surface de révolution incurvée 10 décalée vers l'extérieur de la jante, ces éléments étant destinés à permettre le montage automatique de roues sur des machines traditionnelles.

De façon plus précise, ces machines traditionnelles, notamment pour assurer le vissage automatique avec couple contrôlé des écrous de mise en tension des rayons, sont couramment soit à tête unique de vissage, soit à têtes multiples de vissage.

A titre d'exemple, on citera pour le premier type la visseuse CPM 71 et pour le second la visseuse CPM 74, fabriquées par la Société CPM France.

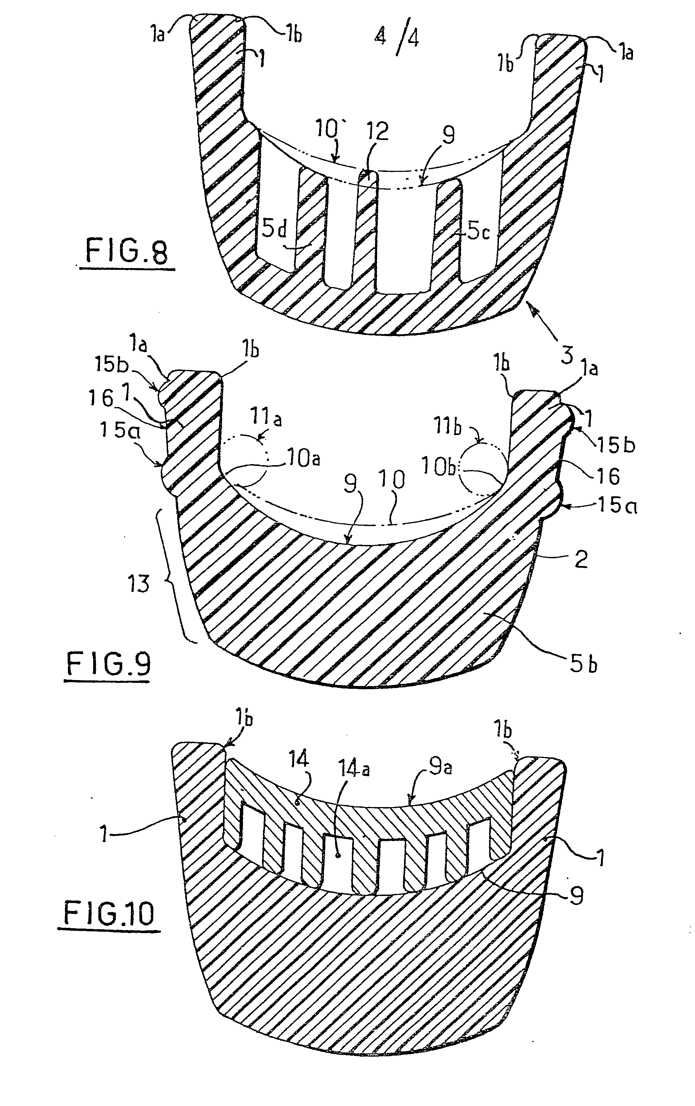

Dans le cas de machines monotête, la jante est déplacée en tournant vers la tête unique de vissage dans le sens de la flèche F1, sous l'action d'un palpeur (figures 3 et 5). Dans ce cas, on a prévu selon l'invention une entretoise de guidage en relief 12 (figure 8), dont l'arête 12a (figure 3) est placée dans le plan de symétrie de la jante et qui est ensuite orientée alternativement et successivement dans le sens inverse de la flèche F1 vers les différents plots 4-1, 4-2, 4-3, 4-4, etc... de réception des écrous de têtes de rayon. De la sorte, quand la jante se déplace dans le sens de la flèche F1 par rapport à l'unique tête de vissage d'une visseuse automatique, un palpeur à extrêmité en V vient enserrer entre ses deux doigts l'extrêmité 12a de l'entretoise de guidage 12, ce qui commande ensuite le déplacement, par exemple à droite (pour le plot 4-2), ou à gauche (pour le plot 4-3) de la tête de vissage. Puis, lorsque l'extrêmité du palpeur vient buter contre la paroi cylindrique extérieure du plot correspondant (4-2 ou 4-3), cela commande la plongée en bonne position de la tête de vissage et le vissage approprié. Après quoi la tête de vissage se relève, et se remet en position médiane prête à opérer de même pour la tête d'écrou suivante.

Dans le cas de machines à têtes multiples de vissage, on déplace la jante par rapport aux têtes dans le sens de la flèche F2. Alors, certaines têtes se trouvent positionnées sur la ligne de travail L1 (figure 3) tandis que d'autres le sont sur la ligne de travail L2. Les palpeurs correspondant à ces têtes viennnent alors, plus simplement que dans le cas précédent, buter contre les parois cylindriques extérieures en relief par rapport à la surface 9 des plots 4-1, 4-2, 4-3, 4-4 etc...

rencontrées directement, actionnant ainsi au bon moment les multiples têtes de vissage.

Selon une disposition préférée, les flancs extérieurs sensiblement plans 2 du caisson 3 de la jante sont inclinés vers l'extérieur par rapport au plan de symétrie de la jante d'un angle faible tel que les plans contenant ces flancs 2 passent sensiblement par l'axe géométrique de pivotement des patins de freins destinés à coopérer avec les flancs 2, ceci pour que ces patins viennent au contact de ces flancs 2 perpendiculairement.

En outre, on prendra soin de régler la hauteur des patins par rapport aux flancs 2 de sorte qu'ils viennent s'appliquer sur ces flancs vers la base du caisson 3 dans la partie référencée 13 sur la partie gauche de la figure 9. Cette zone optimale d'application des patins de freins est prévue, d'une part, pour transmettre minimalement les calories dégagées par le freinage vers la chambre à air et, d'autre part, pour que ces calories soient générées en un point du caisson de jante où il y a le maximum de matière plastique pour constituer un réservoir de calories.

Selon une autre caractéristique de l'invention, on peut prévoir sur les faces extérieures des flancs 1 d'appui des bandages au moins un jonc circulaire en relief 15a rappelant impérativement à l'utilisateur qu'il doit régler la position des patins de freins par rapport à la jante pour qu'ils s'appliquent sur la partie 13 de la jante.

Préférentiellement, on équipera le flanc de jante d'un second jonc en relief 15b vers l'extérieur de la jante et l'on pourra ainsi remplir la couronne annulaire, limitée par les joncs 15a et 15b, d'une matière, par exemple phosphorescente, ayant pour but de réaliser une signalisation optique latérale des roues de cycliste lors de circulation nocturne.

L'invention n'est évidemment pas limitée aux réalisations décrites ci-dessus. En particulier, le nombre ou les dispositions particulières des entretoises occupant l'intérieur du caisson peuvent être très variés, tout en continuant à exercer les fonctions expliquées ci-dessus.

De même, le profil particulier de la jante qui est destiné à recevoir le bandage peut être adapté selon que la jante est destinée à recevoir un bandage du type à pneumatique et chambre à air (comme décrit), ou du type boyau, auquel cas la surface de fond de jante 9 devrait être surelevée pour être plus proche des arêtes 1a et 1b des flancs de jante 1.

Plus précisément, dans ce dernier cas de montage de boyaux (figure 10), on dispose autour de la surface 9 de fond de jante, un profil accessoire de remplissage 14 générant une surface de fond de jante 9a se raccordant directement aux arrondis 1b des flancs d'appui 1 de bandage. Le boyau est alors en appui direct sur cette surface 9a. Le profil 14, réalisé en une matière relativement souple, est tenu en position autour de la jante par la valve et est en serrage autour de la jante. Les deux extrêmités de ce profil sont assemblées entre elles par exemple par clipsage. La partie inférieure du profil 14 présente des évidements 14a pour alléger au maximum ce profil tout en lui gardant la résistance suffisante.

REVENDICATIONS

1° Jante pour roue à rayons, comportant à sa périphérie extérieure des flancs d'appui de bandage reliés par une partie cylindrique constituant la périphérie médiane intérieure de la jante et présentant des logements angulairement équidistants d'écrous de mise en tension de rayons de liaison avec un moyeu central, disposés successivement alternativement d'un côté puis de l'autre du plan médian de symétrie de la jante, caractérisée en ce que la jante étant monobloc fabriquée en une seule opération par injection de matière thermoplastique dans un moule : d'une part, la partie cylindrique médiane intérieure de la jante a la forme d'un caisson annulaire (3) ouvert vers l'extérieur dont les parois en regard (2) se prolongent vers l'extérieur par lesdits flancs d'appui de bandage (1), et dont le volume intérieur est équipé de plots de réception des têtes de rayon (4) de même hauteur que la profondeur du caisson et, d'autre part, les parois latérales dudit caisson ouvert vers l'extérieur sont reliées entre elles par des entretoises planes (5) raccordées perpendiculairement au fond du caisson et venant affleurer dans une surface de révolution (9) constituant le fond de jante.

2° Jante selon la revendication 1° caractérisée en ce que, d'une part, lesdits plots de réception ds têtes de rayon (4) comportent, dans leur partie extérieure un alésage cylindrique circulaire (4a, figure 6) d'une hauteur au moins égale à l'épaisseur d'une tête d'écrou de rayon, dans leur partie médiane une portée conique (4b) destinée à servir d'appui à cet écrou de rayon avec différentes orientations possibles, et dans leur partie intérieure un alésage conique divergent vers l'intérieur de la jante (4c) permettant la libre inclinaison des rayons lors du montage de la roue et que, d'autre part, la partie extérieure du fond de jante est munie d'éléments en relief par rapport à elle (surface 10) pour permettre la détection des plots de réception des têtes de rayon par des palpeurs de machines automatiques à monter des roues.

3° Jante selon les revendications 1° et 2° caractérisée en ce qu'elle est réalisée en résines thermoplastiques polyamides injectables chargées de 40 à 65 % de fibres de verre préensimées et, de préférence, de 45 à 60 % en poids.

4° Jante selon les revendications 1° et 2° caractérisée en ce qu'elle est réalisée en résines thermoplastiques polyesters injectables, du type polybutylène téréphtalate ou du type polyéthylène téréphtalate, chargées de 40 à 45 % de fibres de verre préensimées en poids.

5° Jante selon l'une des revendications 1° à 4° caractérisée en ce que sa hauteur (H, figure 6) est supérieure à 75 % de sa largeur maximale L.

6° Jante selon l'une des revendications 1° à 5° caractérisée en ce que lesdites entretoises comprennent des entretoises reliant perpendicualirement entre elles les parois latérales du caisson (5a, 5b, figure 3).

7° Jante selon l'une des revendications 1° à 6° caractérisée en ce que lesdites entretoises comprennent des entretoises reliant entre elles les zones du caisson munies des plots de réception des têtes de rayons (5c, figure 3).

8° Jante selon la revendication 7°, caractérisée en ce que lesdites entretoises comprennent des entretoises inclinées (5d, figure 3) symétriques par rapport au plan de symétrie de la jante desdites entretoises (5c) reliant les zones munies de plots de réception des têtes de rayon.

9° Jante selon l'une des revendications 1° à 8° caractérisée en ce que les différentes entretoises sont reliées aux bords du caisson par l'intermédiaire de renforcements de matière thermoplastique (5e, figure 3).

10° Jante selon l'une des revendications 1° à 9° caractérisée en ce que les surfaces qui délimitent ses différents éléments constituants tels que flancs, entretoises, caisson, plots, renforcements de matière, ne présentent que des formes arrondies sans aucun angle vif.

11° Jante selon l'une des revendications 1° à 10° caractérisée en ce que le fond de jante est équipé d'un élément de guidage (12, figures 3 et 8) en relief par rapport à lui partant du plan de symétrie de la jante pour aller dans un sens alternativement à droite et à gauche vers les plots successifs de réception des têtes de rayon.

12° Jante selon l'une des revendications 1° à 11° caractérisée en ce que les plots de réception des têtes de rayon dépassent (surface 10) par rapport à la surface (9) de fond de jante dans laquelle affleurent les entretoises de rigidification de la jante.

13° Jante selon l'une des revendications 1° à 12° caractérisée en ce que la surface (9) dans laquelle affleurent les entretoises de rigidification du caisson est une première surface de révolution concave vers l'extérieur reliant sans angle vif entre eux les flancs d'appui de bandage et constituant la partie extérieure du fond de jante (figure 9).

14° Jante selon la revendication 13° caractérisée en ce que les parties en relief de détection des plots de réception des têtes de rayon affleurent dans une seconde surface de révolution (10) concave vers l'extérieur, située au-delà de ladite première surface, et reliant sans angle vif entre eux les flancs d'appui du bandage.

15° Jante selon l'une des revendications 1° à 14° caractérisée en ce que les flancs extérieurs approximativement plans du caisson sont inclinés légèrement par rapport au plan de symétrie de la jante pour que leur plan passe sensiblement par l'axe de rotation des supports de patins de freins.

0026514

16° Jante selon l'une des revendications 1° à 15° caractérisée en ce que les bords latéraux extérieurs du caisson sont sensiblement plans jusqu'à la base du caisson pour que l'application des patins de freins puisse précisément s'effectuer à la base de ce caisson.

17° Jante selon la revendication 16° caractérisée en ce que les faces extérieures des flancs d'appui de bandage comportent un jonc circulaire en relief (15a, figure 9) délimitant la surface d'application (13) des patins de freins.

18° Jante selon la revendication 17° caractérisée en ce que ces faces extérieures comportent un second jonc circulaire en relief (15b, figure 9) concentrique et extérieur audit premier jonc et qu'une matière de signalisation optique (16) pour circulation nocturne est appliquée sur la couronne délimitée par ces deux joncs.

19° Jante selon l'une des revendications 1° à 18° caractérisée en ce que le fond de jante est muni d'un élément profilé accessoire (14, figure 10) raccordant directement entre eux les bords extérieurs des flancs d'appui de bandage pour permettre le montage de boyaux.

FIG.2

FIG.1

1/4

00026514

FIG.3

FIG.4

FIG.5

FIG.6

FIG.7

FIG.8

FIG.9

FIG.10

Office européen
des brevets

Numero de la demande

EP 80 20 0840

**RAPPORT DE RECHERCHE EUROPEENNE**

| Catégorie | Citation du document avec indication, en cas de besoin, des parties pertinentes | Revendication concernée |
|---|---|---|
| | **DOCUMENTS CONSIDERES COMME PERTINENTS** | |
| A | FR - A - 976 246 (ETS. FOX)<br><br>* page 2, colonne de gauche, lignes 10-31; figures 2 et 3 *<br><br>--- | 1,2 |
| A | DE - B - 1 111 975 (ALTENBURGER)<br><br>* colonne 2, ligne 50 à colonne 3, ligne 56; figures 1-3 *<br><br>--- | 1 |
| A | DE - C - 962 318 (NIESSEN)<br><br>* page 1, ligne 1 à page 2, ligne 89; figure 1 *<br><br>--- | 1 |
| A | FR - A - 1 002 960 (MENET)<br><br>* page 2, colonne de gauche, lignes 49-51; figure 12 *<br><br>--- | 1, 19 |
| A | FR - A - 798 681 (BOULANGER)<br><br>* page 1, lignes 1-20; figure 1 *<br><br>--- | 1, 17 |
| A | US - A - 3 707 319 (PAWSAT)<br><br>* colonne 2, lignes 60-68; figures 3 et 7 * | 18 |

**CLASSEMENT DE LA DEMANDE (Int. Cl. 3)**

B 60 B 21/06
         5/02
         1/00
B 62 J   5/20

**DOMAINES TECHNIQUES RECHERCHES (Int. Cl. 3)**

B 60 B
B 62 L
B 62 J

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 05.01.1981 | AYITER |

OEB Form 1503.1   06.78